# EUROPEAN PATENT SPECIFICATION

(11) **EP 2 808 310 B1**
(45) Date of publication and mention of the grant of the patent: **23.08.2017**
(21) Application number: 12866613.8
(22) Date of filing: 13.12.2012
(51) Int. Cl.: C03B 37/014, C03B 37/00, C03B 37/02, G02B 6/00, C03C 13/04

(54) **METHOD FOR PRODUCING OPTICAL FIBER PREFORM**
VERFAHREN ZUR HERSTELLUNG EINER GLASFASERVORFORM
PROCÉDÉ DE PRODUCTION D'UNE PRÉFORME DE FIBRE OPTIQUE

(30) Priority: 25.01.2012 JP 2012013122
(43) Date of publication of application: 03.12.2014
(73) Proprietor: Sumitomo Electric Industries, Ltd., Osaka-shi, Osaka 541-0041 (JP)
(72) Inventor: TAMURA, Yoshiaki, Yokohama-shi Kanagawa 244-8588 (JP); HARUNA, Tetsuya, Yokohama-shi Kanagawa 244-8588 (JP); HIRANO, Masaaki, Yokohama-shi Kanagawa 244-8588 (JP)
(74) Representative: Hoffmann Eitle
(86) International application number: PCT/JP2012/082371
(87) International publication number: WO 2013/111470

(56) References cited:
- EP-A1- 2 784 033
- WO-A2-2004/020357
- JP-A- 2005 250 025
- JP-A- 2005 537 210

## Description

### Technical Field

The present invention relates to a method for producing an optical fiber preform.

### Background Art

The known optical fibers include those of silica glass in which a core region is doped with an alkali metal element (cf. Patent Literatures 1 to 9). It is believed that, in a configuration of an optical fiber preform a core part of which is doped with the alkali metal element, the viscosity of the core part can be lowered during drawing of the optical fiber preform into an optical fiber, to promote relaxation of network structure of silica glass and, for this reason, it can reduce the attenuation of the optical fiber.

One of the known methods for adding the alkali metal element into silica glass is the diffusion method (e.g., cf. Patent Literatures 1 and 2). The diffusion method is carried out as follows: while source vapor of the alkali metal element or an alkali metal salt or the like as a source material is introduced into a glass pipe, the glass pipe is heated by an external heat source or plasma is generated in the glass pipe, thereby diffusely adding the alkali metal element into the inner surface of the glass pipe.

After the alkali metal element is added in the vicinity of the inner surface of the glass pipe in this manner, this glass pipe is heated to reduce its diameter. After the reduction of diameter, the inner surface of the glass pipe is etched by a certain thickness, for the purpose of removing transition metal elements such as Ni and Fe which have been simultaneously added during the process of adding the alkali metal element. Since the alkali metal element diffuses faster than the transition metal elements, the alkali metal element can remain even after the etching of the glass surface by the certain thickness to remove the transition metal elements. After the etching, the glass pipe is heated to eliminate the hollow thereof, thereby producing a core rod doped with the alkali metal element. Outside this alkali-metal-element-doped core rod, a cladding part is formed which has the refractive index lower than the core part including the alkali-metal-element-doped core rod, thereby producing the optical fiber preform. Then this optical fiber preform is drawn to produce an optical fiber. EP-A-2784033, which is prior art under Article 54(3) EPC, discloses a method of making an optical fiber preform including an alkali metal. WO 2004/020357 discloses a method of making an optical fiber preform comprising diffusing an alkali metal through the surface of a glass and etching the diffusion surface.

### Citation List

### Patent Literatures

Patent Literature 1: Japanese Translation of PCT International Application Publication No. 2005-537210
Patent Literature 2: U.S. Pat. Published Application No. 2006/0130530
Patent Literature 3: Japanese Translation of PCT International Application Publication No. 2007-504080
Patent Literature 4: Japanese Translation of PCT International Application Publication No. 2008-536190
Patent Literature 5: Japanese Translation of PCT International Application Publication No. 2010-501894
Patent Literature 6: Japanese Translation of PCT International Application Publication No. 2009-541796
Patent Literature 7: Japanese Translation of PCT International Application Publication No. 2010-526749
Patent Literature 8: International Publication WO 98/002389
Patent Literature 9: U.S. Pat. No. 5,146,534

### Summary of Invention

### Technical Problem

The alkali metal element diffuses very quickly in silica-based glass. Particularly, the optical fiber preform is heated at the temperature of 1700°C or higher during the fiber drawing. The diffusion of the alkali metal element in such a high temperature state is implemented with the diffusion coefficient of 1×10⁻⁶ cm²/s and the heating time of 0.5 second and thus the diffusion distance is 14 µm, which is much larger than the core radius of ordinary optical fiber, 5 µm. In this manner, the alkali metal element added into the core part comes to diffuse deeper into the cladding part.

As a consequence of this diffusion of the alkali metal element, an average concentration of the alkali metal in the core in the optical fiber state becomes extremely low, approximately 1/10 of an average concentration of the alkali metal in the core in the optical fiber preform. The core part of the optical fiber is preferably doped with the alkali metal in an average concentration of not less than 1 ppm. Therefore, the core part of the optical fiber preform is preferably doped with the alkali metal in an average concentration of not less than 10 ppm. In this case, a peak concentration of the alkali metal in the core part of the optical fiber preform is not less than 500 ppm.

The conventional process of producing the optical fiber preform with the peak concentration of the alkali metal of not less than 500 ppm in the core part had the problem of poor productivity because crystallinity was extremely likely to take place in the alkali metal element adding step of adding the alkali metal element in the vicinity of the inner surface of the silica glass pipe, the etching step of etching the inner surface of the silica glass pipe by vapor phase etching, and the collapsing step of eliminating the hollow of the silica glass pipe to produce the silica glass rod.

The present invention has been accomplished in order to solve the above problem and it is an object of the present invention to provide a method allowing production of an optical fiber preform by which, in a state of an optical fiber after drawn, the alkali metal element can also be contained in a satisfactory concentration in the core region of the optical fiber.

### Solution to Problem

The present invention relates to a method for producing an optical fiber preform including a core part and a cladding part and being composed of silica-based glass, comprising the subsequent steps of:
(i) adding an alkali metal in a maximum concentration of ≥ 500 ppm and ≤ 20,000 ppm in the vicinity of an inner surface of a glass pipe composed of silica glass;
(ii) etching the inner surface of the glass pipe by vapor phase etching under flow of SF₆ gas and chlorine gas, wherein the flow rate of the chlorine gas is 2-10 times the flow rate of the SF₆ gas, and in the absence of oxygen through an inner hollow of the glass pipe, wherein the glass pipe is heated so that a temperature of the inner surface of the glass pipe becomes ≥1,500°C;
(iii) collapsing the glass pipe to eliminate the hollow of the glass pipe and to produce a glass rod;
and further processing the obtained glass rod to produce the optical fiber preform.

Preferred embodiments of the present method are as defined in the appended dependent claims and/or in the following detailed description.

An optical fiber preform produced by the method of the present invention has a first core part and a second core part provided around the first core part, wherein in the first core part, an average amount of the alkali metal added is not less than 10 atomic ppm, an amount of chlorine added is not more than 500 ppm, and an amount of fluorine added is not less than 500 ppm, and wherein in the second core part, an average amount of the alkali metal added is not more than 10 atomic ppm and an amount of chlorine added is not less than 1000 ppm.

An optical fiber obtained by drawing the optical fiber preform produced by the present method shows an attenuation at a wavelength of 1550 nm of not more than 0.180 dB/km.

### Advantageous Effect of Invention

According to the present invention, we can produce the optical fiber preform by which, in the state of the optical fiber after drawn, the alkali metal element can also be contained in a satisfactory concentration in the core region of the optical fiber.

### Brief Description of Drawings

Fig. 1 is a flowchart of a method for producing an optical fiber preform.
Fig. 2 is a drawing illustrating an alkali metal adding step (step S1) in the method for producing the optical fiber preform.
Fig. 3 is a table showing a list of presence/absence of crystals after etching against gas species and flow rates of carrier gas in an etching step.
Fig. 4 is a table showing a list of presence/absence of crystals and states of KCl separate phases after the etching against flow rates of chlorine gas as carrier gas in the etching step.
Fig. 5 is a table showing a list of relationship of maximum concentrations of potassium with states of an inner surface of a pipe after the etching.
Fig. 6 is a table showing a list of relationship of temperatures of the inner surface of the pipe in the etching step with states of the inner surface of the pipe after the etching.
Fig. 7 is a table showing a list of relationship of heating time durations of the pipe in the etching step with states of the inner surface of the pipe after the etching.

### Description of Embodiments

Embodiments of the present invention will be described below in detail with reference to the accompanying drawings. The same elements will be denoted by the same reference signs in the description of the drawings, without redundant description.

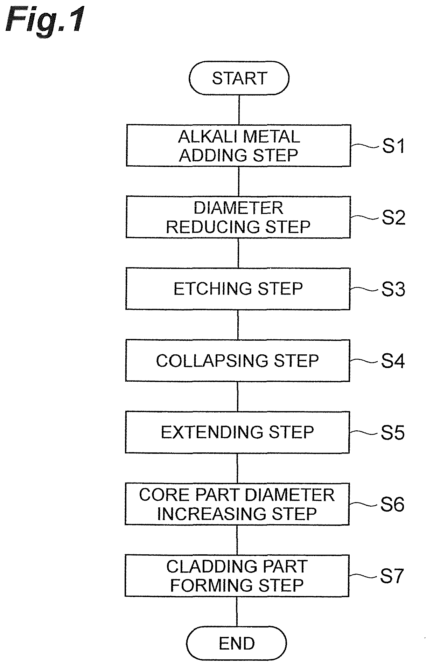

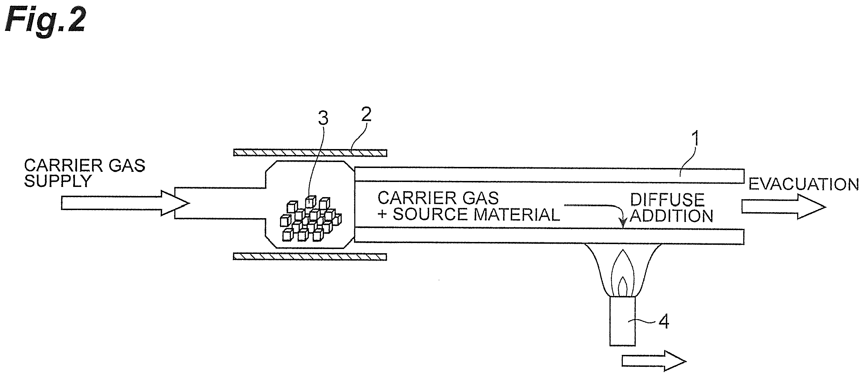

Fig. 1 is a flowchart of a method for producing an optical fiber preform. The method f includes successively performing processes of an alkali metal adding step (step S1), a diameter reducing step (step S2), an etching step (step S3), a collapsing step (step S4), an extending step (step S5), a core part diameter increasing step (step S6), and a cladding part forming step (step S7), thereby to produce the optical fiber preform including a core part and a cladding part and being composed of silica-based glass. Fig. 2 is a drawing illustrating the alkali metal adding step (step S1) in the method for producing the optical fiber preform.

In the alkali metal adding step (step S1), an alkali metal is added into an inner wall surface of a glass pipe 1 composed of silica-based glass. The alkali metal to be added is preferably potassium and other alkali metals to be added herein may be sodium, rubidium, cesium, and so on. For example, as shown in Fig. 2, potassium bromide (KBr) is used as an alkali metal source material 3 and it is heated by an external heat source 2 to generate KBr vapor. While the KBr vapor is introduced along with carrier gas into the glass pipe 1, the outer surface of the glass pipe 1 is then heated by an external heat source 4. The glass pipe is heated with the external heat source 4 being traversed several times, to diffusely add the potassium metal element into the inner surface of the glass pipe 1.

In the diameter reducing step (step S2) after the alkali metal adding step (step S1), the supply of KBr vapor by heating of the source supply section is halted and, thereafter, the heating by the external heat source is continued to reduce the diameter of the glass pipe.

In the subsequent etching step (step S3), SF₆ gas is made to flow along with carrier gas through the inner hollow of the diameter-reduced glass pipe and the external heat source is continuously traversed in the longitudinal axial direction of the glass pipe, thereby to heat the glass pipe. This step results in etching the inner wall surface of the glass pipe by the thickness of about 400-800 µm, thereby removing a layer containing a large amount of impurities such as transition metals and OH groups diffusely added simultaneously in the potassium diffusion step.

In the next collapsing step (step S4), while the inside of the glass pipe is depressurized, the surface of the glass pipe is heated to the temperature of 2000°C-2250°C by a heat source, e.g., flame from an oxyhydrogen burner, and the heat source is continuously traversed in the longitudinal direction of the glass pipe to eliminate the hollow of the glass pipe, thereby to obtain a glass rod comprised of transparent silica-based glass. The glass rod obtained in the collapsing step (step S4) is extended while being heated by a heat source such as the oxyhydrogen burner in the subsequent extending step (step S5).

In the next core part diameter increasing step (step S6), silica glass is provided around the glass rod to obtain a glass rod with a diameter-increased part. The silica glass provided herein becomes a core part or a part of a core of an optical fiber. In the next cladding part forming step (step S7), an optical cladding part is formed around the glass rod obtained in the above-described manner. The optical fiber preform is produced in this manner.

The etching step (step S3) in a certain case is performed using oxygen gas as carrier gas. In this case, mixed gas of this oxygen gas with SF₆ gas is made to flow through the inner hollow of the glass pipe and the glass pipe is heated. This method can etch the inner wall surface of the glass pipe and thereby remove the layer containing the large amount of impurities such as transition metals and OH groups. However, when the glass pipe doped with potassium 500 ppm or more is etched by the foregoing method, crystallization of glass is more likely to take place.

It was confirmed that this crystallization often took place downstream of the flow of etching gas and, particularly, in portions where glass powder or the like made by etching was deposited. Furthermore, it was confirmed by analysis of the deposited material that the deposit consisted of high-concentration potassium sulfate (K₂SO₄) and glass. K₂SO₄ is very stable and it is presumed that in the heating such as the etching, the alkali salt remaining in the pipe also causes the crystallization with K₂SO₄ serving as nuclei.

A conceivable method for suppressing the generation of K₂SO₄ so as to inhibit the crystallization is to mix Cl gas into the carrier gas in the etching. When the Cl gas is mixed, most of K reacts with Cl to produce KCl. KCl has a low boiling point and evaporates by heat during the etching to be removed. This method is considered to inhibit the crystallization with the potassium salt serving as nuclei.

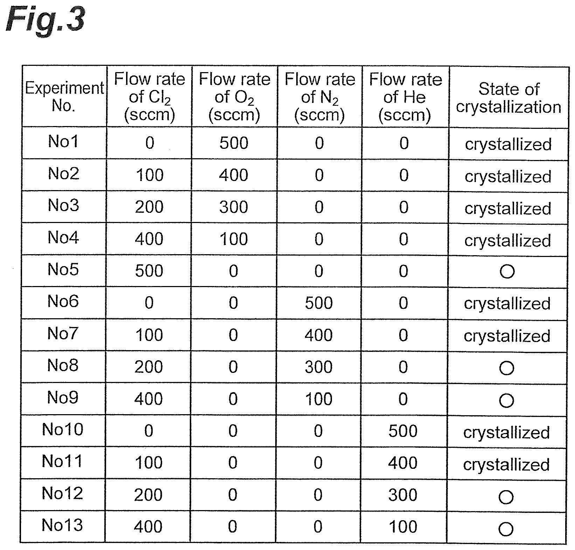

Fig. 3 is a table showing a list of presence/absence of crystals after the etching against gas species and flow rates of the carrier gas in the etching step. In the etching step the SF₆ gas and the carrier gas (oxygen, nitrogen, helium, chlorine, or mixed gas of these) were allowed to flow through the inner hollow of the glass pipe and the glass pipe was heated from the outside with the heat source being moved at the moving speed of 40 mm/min. The glass pipe was doped with potassium by the diffusion method and a maximum concentration of potassium was 2000 ppm. The flow rate of the SF6 gas was 100 sccm and the overall flow rate of the carrier gas 500 sccm. The presence/absence of crystals after the etching was checked against gas species and flow rates of the carrier gas made to flow and the results obtained were as shown in Fig. 3.

It was confirmed by comparison among the results of Experiment Nos. 1, 5, 6, and 10 in Fig. 3 that no crystallization occurred in the experiment with supply of chlorine gas as carrier gas. A presumable reason for it is that the existence of chlorine causes potassium to evaporate in the form of KCl, resulting in removal of potassium. It is presumed on the other hand that under the conditions without supply of chlorine gas as carrier gas, potassium unites with oxygen in the etching gas or the glass to generate K₂SO₄ and it acts as crystal nuclei to grow crystals.

It was confirmed by the results of Experiment No. 1 to Experiment No. 5 in Fig. 3 that when oxygen was mixed in the carrier gas, crystallization occurred irrespective of the existence of chlorine. Since deposition of K₂SO₄ was confirmed on the inner surface of the etched pipe under the conditions of the carrier gas containing oxygen, it is presumed that part of potassium turned into K₂SO₄ and crystals grew around crystal nuclei thereof.

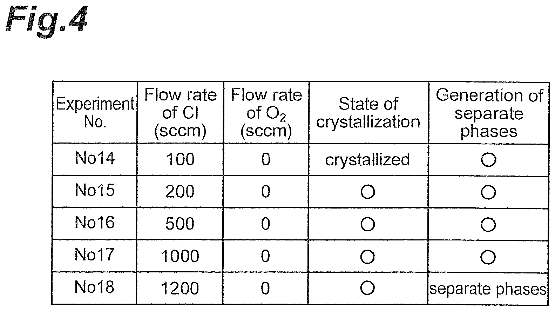

Fig. 4 is a table showing a list of presence/absence of crystals and states of KCl separate phases after the etching against flow rates of chlorine gas as carrier gas in the etching step. In the etching step, the SF₆ gas and chlorine gas were allowed to flow through the inner hollow of the glass pipe and the glass pipe was heated from the outside thereof with the heat source being moved at the moving speed of 40 mm/min. The glass pipe was doped with potassium by the diffusion method and a maximum concentration of potassium was 2000 ppm. The flow rate of the SF₆ gas was 100 sccm and the flow rate of the chlorine gas as carrier gas was from 100 sccm to 1200 sccm. The presence/absence of crystals and states of KCl separate phases in the glass after the etching were checked against flow rates of the chlorine gas made to flow and the results obtained were as shown in Fig. 4.

It was confirmed by the results shown in Fig. 4 that crystallization was inhibited under the conditions that the flow rate of the chlorine gas was not less than twice the flow rate of the SF₆ gas. A presumable reason for it is that potassium failed to fully turn into KCl under the condition of the chlorine gas flow rate of less than 200 sccm and generated K₂SO₄, resulting in crystallization around nuclei thereof. On the other hand, when the flow rate of the chlorine gas was not less than 10 times the flow rate of the SF₆ gas, excessively generated KCl made separate phases of KCl in the glass and a phenomenon of the glass becoming white and cloudy because of the separate phases was observed. The glass body with the separate phases thus generated was a cause of bubbles in the later preform forming step and it was difficult to make a fiber therefrom.

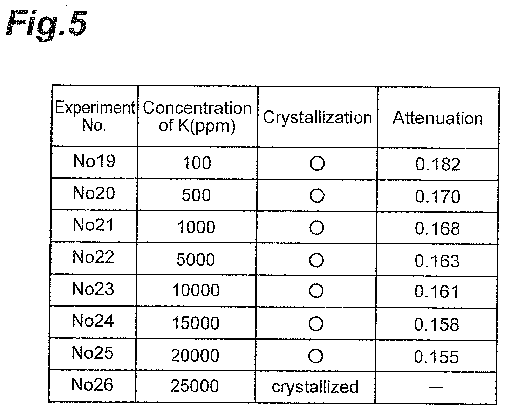

Fig. 5 is a table showing a list of relationship of maximum concentrations of potassium with states of the inner surface of the pipe after the etching. While the SF₆ gas (100 sccm) and Cl₂ gas (500 sccm) were allowed to flow through the inner hollow of the pipe with the outer diameter of 25 mm and the thickness of 10 mm having the inner surface doped with K, the etching was carried out under heat by the heat source moving at the traverse speed of 40 mm/min. The relationship of the maximum concentrations of potassium in the inner surface of the pipe with the states of the inner surface of the pipe after the etching in this case was as shown in Fig. 5.

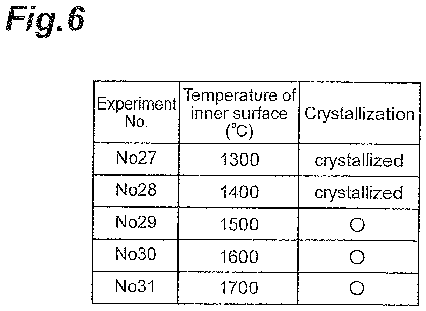

Fig. 6 is a table showing a list of relationship of temperatures of the inner surface of the pipe in the etching step with states of the inner surface of the pipe after the etching. In the etching step, the SF₆ gas (100 sccm) and chlorine gas (500 sccm) were allowed to flow through the inner hollow of the glass pipe and the glass pipe was heated from the outside thereof with the heat source being moved. The glass pipe had the outer diameter of 25 mm and the thickness of 10 mm. The glass pipe was doped with potassium by the diffusion method and a maximum concentration of potassium was 20000 ppm. The relationship of the temperatures of the inner surface of the pipe in the etching step with the states of the inner surface of the pipe after the etching was as shown in Fig. 6.

When the chlorine gas is used as carrier gas in the etching step, KCl is made as a reaction product between potassium in the pipe and chlorine. If KCl remains in the pipe as it is, it will become a cause of crystallization. Since KCl has the boiling point of 1500°C, it can evaporate with the inner surface of the pipe being heated at 1500°C or higher, so as to be removed from the inner surface of the pipe. From this fact, the crystallization was inhibited by heating the inner surface of the pipe to 1500°C or higher, as shown in Fig. 6. It is noted herein that the glass pipe can hardly be heated at 1700°C or higher because the glass itself evaporates at such high temperatures.

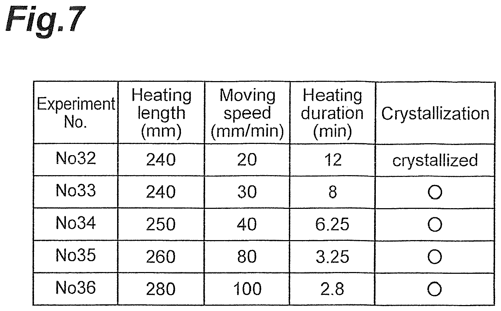

Fig. 7 is a table showing a list of relationship of heating time durations of the pipe in the etching step with states of the inner surface of the pipe after the etching. In the etching step, the SF₆ gas (100 sccm) and chlorine gas (500 sccm) were allowed to flow through the inner hollow of the glass pipe and the glass pipe was heated from the outside thereof with the heat source being moved. The glass pipe had the outer diameter of 25 mm and the thickness of 10 mm. The glass pipe was doped with potassium by the diffusion method and a maximum concentration of potassium was 20000 ppm. The states of the pipe after the etching were compared with the heating time durations each obtained by dividing a heating length (heat zone) at 800°C or higher with adjustment of thermal power so as to keep the temperature of the inner surface of the pipe at 1600°C or higher in the heating, by a moving speed of the burner, and the results obtained were as shown in Fig. 7.

As shown in Fig. 7, creation of crystals was observed under the condition of long heating duration. A presumable reason for it is that the heating duration was enough for growth of crystals. On the other hand, the conditions of the heating duration shorter than 2.8 minutes can be achieved by a method of further decreasing the heating length or increasing the moving speed of the heat source, but it was infeasible to keep the temperature of the inner surface of the pipe at 1600°C or higher, with the result of crystallization. It is, however, considered that shorter-time heating will become feasible if the heat source comes to have higher performance in future than at present. The heating of the glass pipe by the heat source may be performed multiple times but is preferably performed only once. It is because, in the case of the heating being performed multiple times, the alkali metal salt such as KCl, for example, remaining in a small amount on the inner surface of the glass pipe after generated by the first heating can conceivably grow into crystals during the subsequent heating. Namely, the etching step is preferably carried out by heating the glass pipe so as not to heat an identical portion of the glass pipe multiple times.

### Example 1

In Example, the processes described below were successively carried out to produce an optical fiber preform and an optical fiber and transmission characteristics of this optical fiber were evaluated.

First, a glass pipe of silica-based glass was prepared. This glass pipe contained Cl 100 atomic ppm and fluorine 6,000 atomic ppm as dopants and a concentration of the other impurities was not more than 10 ppm; therefore, it was substantially pure silica glass. This glass pipe had the outer diameter of 35 mm and the inner diameter of about 20 mm.

In the subsequent alkali metal adding step, as shown in Fig. 2, potassium bromide (KBr) was used as the alkali metal source material 3 and it was heated to the temperature of 840°C by the external heat source 2 to generate KBr vapor. While the KBr vapor, together with oxygen at the flow rate of 1 SLM (equivalent to 1 liter/min in the standard condition) introduced as carrier gas, was introduced into the glass pipe 1, the glass pipe was heated by an oxyhydrogen burner as the external heat source 4 so that the outer surface of the glass pipe 1 became 2150°C. The oxyhydrogen burner was traversed at the speed of 40 mm/min to heat the glass pipe by a total of 15 turns, so as to diffusely add the potassium metal element into the inner surface of the glass pipe 1. A maximum concentration of potassium in this alkali-metal-doped pipe was 5000 atomic ppm.

In the next diameter reducing step, while oxygen (0.5 SLM) was allowed to flow through the inner hollow of the glass pipe doped with the potassium metal element, the glass pipe was heated by the external heat source so that the outer surface thereof became 2250°C. The heating was conducted by a total of 6 turns of the external heat source to reduce the inner diameter of the glass pipe doped with the potassium metal element, to 5 mm.

In the next etching step, while the mixed gas of SF₆ gas (0.1 1 SLM) and Cl gas (0.5 SLM) was introduced into the glass pipe doped with the potassium metal element, the vapor phase etching was conducted under heating by the external heat source to etch the inner surface of the glass pipe to the inner diameter of 5.5 mm.

In the subsequent collapsing step, while oxygen (1 SLM) was introduced into the glass pipe, the inside of the glass pipe was depressurized to the absolute pressure of 1 kPa and the surface temperature thereof was set to 2150°C by the external heat source to eliminate the hollow, thereby obtaining an alkali-metal-doped core glass rod with the diameter of 25 mm. This alkali-metal-doped core glass rod had a maximum potassium concentration of 1000 atomic ppm and a region doped with potassium 10 or more atomic ppm in the diameter of 10 mm.

In the next extending step, the alkali-metal-doped core glass rod was extended to the diameter of 20 mm and, thereafter, the outer peripheral part of the alkali-metal-doped core glass rod was ground to the diameter of 13 mm (first core part).

In the next core part diameter increasing step, silica-based glass doped with Cl 5,000 atomic ppm (second core part) was provided on the outside of the alkali-metal-doped core glass rod up to the outer diameter of 65 mm, the resulting rod was then extended to the diameter of 24 mm, and, thereafter, the outer peripheral part thereof was ground to the diameter of 20 mm to obtain core glass rod. The first core part and the second core part together constitute a core region of optical fiber. An average concentration of the alkali metal in this core part was 50 atomic ppm. The glass of the second core part was formed by the rod-in collapse method of preparing a silica-based glass pipe doped with Cl 6,000 atomic ppm, inserting the alkali-metal-doped core glass rod into this glass pipe, and heating them by an external heat source to integrate them with each other. As a result, a ratio D2/D1 of the diameter (D2) of the second core part doped with a high concentration of chlorine to the diameter (D1) of the first core part was 3.

In the next cladding part forming step, the first cladding part of silica-based glass doped with fluorine (optical cladding glass part) was formed on the outside of the core glass rod. A maximum relative refractive-index difference between the second core part and the first cladding part was approximately 0.34%. This first cladding part was formed by the rod-in collapse method of preparing a silica-based glass pipe doped with fluorine, inserting the core glass rod into this glass pipe, and heating them by an external heat source to integrate them with each other. As a result of the clad formation by the rod-in collapse method, it was feasible to keep sufficiently low the amount of water in the core glass rod and the first cladding part in the vicinity thereof.

Furthermore, the core glass rod with the first cladding part was subjected to a processing step such as a step of extending the glass rod to a predetermined diameter and then silica-based glass doped with fluorine (second cladding part) was formed on the outside of the glass rod to obtain an optical fiber preform. The outer diameter of the first cladding part was 36 mm and the outer diameter of the second cladding part 140 mm. A maximum relative refractive-index difference between the second core part and the second cladding part was approximately 0.32%. The OVD process was used for forming the second cladding part. Concentrations of OH groups were measured by infrared absorption spectroscopy and a peak OH-group concentration was approximately 400 atomic ppm at an interface between the first cladding part and the second cladding part.

The optical fiber preform produced as described above was drawn into an optical fiber. At this time, the drawing speed was 2,300 m/min and the drawing tension 0.5 N.

Various characteristics of the optical fiber produced as described above were as follows. The concentration of potassium added (average in the core) was approximately 3 atomic ppm. The attenuation (at the wavelength 1300 nm) was 0.287 dB/km, the attenuation (at the wavelength 1380 nm) 0.292 dB/km, and the attenuation (at the wavelength 1550 nm) 0.163 dB/km. The wavelength dispersion (at the wavelength 1550 nm) was +15.9 ps/nm/km and the dispersion slope (at the wavelength 1550 nm) +0.054 ps/nm²/km. The zero dispersion wavelength was 1310 nm and the dispersion slope at the zero dispersion wavelength +0.083 ps/nm²/km. The effective cross sectional area (at the wavelength 1550 nm) was 82 µm², the mode field diameter (at the wavelength 1550 nm) 10.3 µm, and the mode field diameter (at the wavelength 1310 nm) 9.1 µm. The fiber cutoff wavelength (2 m) was 1310 nm, and the cable cutoff wavelength (22 m) 1230 nm. The polarization mode dispersion (C-and L-bands) was 0.11 ps/km^{1/2} and the nonlinear coefficient (at the wavelength 1550 nm, in a random polarization state) 1.1 (W·km)⁻¹. The optical fiber was obtained with low attenuation as described above.

### Industrial Applicability

According to the present invention, we can produce the optical fiber preform by which, in the state of the optical fiber after drawn, the alkali metal element can also be contained in the satisfactory concentration in the core region of the optical fiber.

### Reference Signs List

10 silica glass pipe; 20 dummy pipe; 30 KBr source material; 40 electric furnace; 50 oxyhydrogen burner.

## Claims

1. A method for producing an optical fiber preform including a core part and a cladding part and being composed of silica-based glass, comprising the subsequent steps of:
(i) adding an alkali metal in a maximum concentration of ≥ 500 ppm and ≤ 20,000 ppm in the vicinity of an inner surface of a glass pipe composed of silica glass;
(ii) etching the inner surface of the glass pipe by vapor phase etching under flow of SF₆ gas and chlorine gas, wherein the flow rate of the chlorine gas is 2-10 times the flow rate of the SF₆ gas, and in the absence of oxygen through an inner hollow of the glass pipe, wherein the glass pipe is heated so that a temperature of the inner surface of the glass pipe becomes ≥ 1,500°C;
(iii) collapsing the glass pipe to eliminate the hollow of the glass pipe and to produce a glass rod;
and further processing the obtained glass rod to produce the optical fiber preform.

2. The method of claim 1, wherein the alkali metal is potassium.

3. The method of claim 1 or 2, wherein in step (ii) the duration of time of heating each point of the glass pipe at a temperature of ≥ 800°C is < 8 minutes.

4. The method of any of claims 1-3, wherein in step (ii) the glass pipe is heated so as not to heat an identical portion of the glass pipe multiple times.

## Patentansprüche

1. Verfahren zur Herstellung einer optischen Faservorform, die einen Kernbereich und einen Mantelbereich beinhaltet, und aus Glas auf Siliciumdioxid-Basis zusammengesetzt ist, worin das Verfahren die folgenden Schritte umfasst:
(i) Zugabe eines Alkalimetalls in einer maximalen Konzentration von ≥ 500 ppm und ≤ 20.000 ppm in der Nähe der inneren Oberfläche eines aus Silicumdioxid-Glas bestehenden Glasrohrs;
(ii) Ätzen der inneren Oberfläche des Glasrohrs durch Gasphasenätzen unter Durchfluss von SF₆- und Chlorgas, worin die Durchflussmenge des Chlorgases durch einen inneren Hohlraum des Glasrohrs in Abwesenheit von Sauerstoff 2-10 mal der Durchflussmenge des SF₆-Gases entspricht, worin das Glasrohr so erhitzt wird, dass die Temperatur der inneren Oberfläche des Glasrohrs ≥ 1.500°C ist;
(iii) Kollabieren des Glasrohrs zur Beseitigung des Hohlraums und Erzeugung eines Glasstabs.

2. Verfahren gemäß Anspruch 1, worin das Alkalimetall Kalium ist.

3. Verfahren gemäß Anspruch 1 oder 2, worin in Schritt (ii) die Dauer des Heizens einer jeden Stelle des Glasrohrs bei einer Temperatur von ≥ 800 °C < 8 Minuten ist.

4. Verfahren gemäß mindestens einem der Ansprüche 1-3, worin in Schritt (ii) das Glasrohr so erhitzt wird, dass der selbe Bereich des Glasrohrs nicht mehrere Male erhitzt wird.

## Revendications

1. Procédé pour la production d'une préforme de fibre optique incluant une partie d'âme et une partie de gaine et étant composée de verre à base de silice, comprenant les étapes suivantes:
(i) une addition de métal alcalin à une concentration maximale ≥ à 500 ppm et ≤ à 20 000 ppm à proximité d'une surface intérieure d'un tube en verre composé de verre de silice ;
(ii) une gravure de la surface intérieure du tube de verre par gravure en phase vapeur sous écoulement de gaz SF₆ et de chlore gazeux, dans lequel le débit du chlore gazeux est de 2-10 fois le débit du gaz SF₆, et en l'absence d'oxygène à travers l'intérieur creux du tube de verre, dans lequel le tube de verre est chauffé de sorte qu'une température de la surface intérieure du tube de verre devient ≥ à 1500°C;
(iii) un compactage du tube de verre pour élimination du creux du tube de verre pour production d'une tige de verre ;
et un traitement subséquent de la tige de verre obtenue pour production d'une préforme de fibre optique.

2. Procédé selon la revendication 1, dans lequel le métal alcalin est le potassium.

3. Procédé selon la revendication 1 ou 2, dans lequel, dans l'étape (ii), la durée de chauffage de chaque point du tube de verre à une température ≥ à 800°C est < à 8 minutes.

4. Procédé selon l'une quelconque des revendications 1-3, dans lequel, dans l'étape (ii), le tube de verre est chauffé de manière à ne pas chauffer plusieurs fois une partie identique du tube de verre.
